# EUROPÄISCHE PATENTSCHRIFT

(11) **EP 0 274 460 B1**
(45) Veröffentlichungstag und Bekanntmachung des Hinweises auf die Patenterteilung: **10.08.1994**
(21) Anmeldenummer: 88830005.0
(22) Anmeldetag: 08.01.1988
(51) Int. Cl.: B60R 15/00, E03C 1/01

(54) **Karusseleinheit mit sanitären Einrichtungen.**
Sanitary round-about equipped with different hygienic devices.
Manège sanitaire pourvu de différents appareils sanitaires.

(30) Priorität: 09.01.1987 IT 4751087; 11.09.1987 IT 4837687
(43) Veröffentlichungstag der Anmeldung: 13.07.1988
(73) Patentinhaber: TECNOSPAZIO SRL, 00173 Roma (IT)
(72) Erfinder: Crocoli, Pietro, I-00173 Roma (IT)
(74) Vertreter: Sneider, Massimo

(56) Entgegenhaltungen:
- DE-A- 2 014 018
- DE-A- 3 200 115
- DE-C- 866 149
- FR-A- 948 539
- FR-A- 2 114 726
- FR-A- 2 297 960
- US-A- 3 981 323

## Beschreibung

Es ist bekannt, dass die Anzahl von Wohnwagen, Wohnanhängern und dergleichen, welche jährlich hergestellt werden, seit einigen Jahren in Verbreitung begriffen ist. Es ist gleichfalls bekannt, dass die andauernde Forschung und Durchführung von Versuchen diese Mittel immer mehr behaglich und bewohnbar gestaltet hat. Die Innenräume sind in der Tat derart gestaltet, um für verschiedene Erfordernisse, welche sich im Laufe des Tages ergeben können, nutzbar zu sein, indem zum Beispiel ein Sofa in ein Bett umgeformt wird. Bei einer aufmerksamen Betrachtung eines z.Z. hergestellten Wohnwagens oder Wohnanhängers kann man leicht verstehen, dass die einzige Zone, obgleich in den vergangenen Jahren fühlbar verbessert, welche für einen zweifachen Gebrauch noch nicht nutzbar ist, die Zone der Toilette ist, welche im Inneren eines Wohnwagens einen nicht geringfügigen für andere Handlungen nicht verwertbaren Raum einnimmt.

Ein Gegenstand der vorliegenden Erfindung ist eine verbesserte Gruppe von hygienisch-sanitären Geräten, wobei z.B. das Waschbecken, das WC und die Dusche untereinander durch vertikale und auf einer drehenden Plattform angeordnete Scheidewände getrennt sind, welche es dem Benutzer ermöglicht jeweils die gewünschte hygienisch-sanitäre Anlage zur Verfügung zu haben.

Die Scheidewände, welche die verschiedenen hygienisch-sanitären Geräte trennen, haben einen vorzugsweise krummen Verlauf und weisen von oben gesehen insgesamt einen sternförmigen Verlauf mit drei mehreren Auslegern auf. Im Kreuzungspunkt der drei oder Wandungen werden die Zufuhrleitungen des Wassers hindurchgeführt, während der Ablass der verschiedenen Geräte im Mittelpunkt der Plattform getätigt ist.

Die drehende Plattform, auf der die hygienisch-sanitären Geräte angeordnet sind, schneidet auf einer gewissen Strecke eine zweite Plattform, welche geeignet ist sowohl als Duschteller als auch zweckdienlich überdeckt als Trittebene für die anderen hygienisch-sanitären Geräte im Falle deren Gebrauches zu wirken.

Perimetrisch zu dieser zweiten ortsfesten Plattform sind Schiebetüren angeordnet, welche derart geformt sind, dass die dem Aussenumfang der Plattform leicht folgen können. Im Falle des Gebrauches von einem der

Aus dem Patent DE-A-2 014 018 ist gemäß dem Oberbegriff des Anspruchs 1 ein Karussell mit sanltären Einrichtungen an ebenen senkrechten Wänden bekannt, die von einer Drehplattform getragen werden und bei dem die Abflüsse der sanitären Einrichtungen jeweils mit der Drehachse der Plattform verbunden sind und in dem die Drehplattform selbst sich auf einem festen Becken befindet, das diese enthält.Die Halterung zwischen der Drehplattform selbst und dem festen Becken besteht aus einem ringförmigen Vorsprung der Drehplattform, die in eine Nute des festen Beckens eingreift, sodass eine Art ringförmiger Düker zwischen dem mittleren Bereich des Beckens und der Drehplattform ausgebildet wird, der vor Benutzung einer sanitären Einrichtung mit Wasser gefüllt werden muss. Es wird keinerlei Vorkehrung zur Abschirmung einer sanitären Einrichtung von dem restlichen Raum vorgesehen, in dem diese aufgestellt ist. auf der drehbaren Plattform angeordneten hygienisch-sanitären Geräte können die Schiebetüren geschlossen werden, derart um so das normale Alleinsein zu gewährleisten, während im Falle des Nicht-Gebrauches der hygienisch-sanitären Geräte die Schiebetüren verschoben und an die Scheidewand gelehnt werden können, welche die Dusche trägt, indem jegliches Hindernis vermieden und der Raum des Duschtellers für den Durchgang oder einen anderen Gebrauch vollkommen frei gehalten wird.

Wie angedeutet sind die hygienisch-sanitären Geräte mit der drehenden Plattform einteilig gestaltet, welche letztere im Mittelpunkt abgestützt und am nach unten gewandten Teil mit Nylonkugeln, pirouettierenden Rädchen oder dergleichen versehen ist, welche die einwandfreie Drehung gegenüber der Auflageebene des Wohnwagens oder des Wohnanhängers und den Ausgleich mit jedem beliebigen verwendeten hygienisch-sanitären Gerät gewährleisten.

Um zu ermöglichen, dass sich die Plattform, und mit dieser die auf derselben einteilg gemachten hygienisch-sanitären Geräte, frei drehen kann, weisen die Zufuhr- und Ablassleitungen des Wassers an den Anschlusspunkten mit den vom Dach des Wohnwagens oder des Wohnanhängers kommenden Leitungen und am Anschlusspunkt mit dem Sammelbehälter des Schmutzwassers Elemente auf, welche dank von Kugeln oder dergleichen und von Dichtungen, die jegliche Leckage verhindern, die Drehung gestatten.

Bei einer bevorzugten Lösung weist die drehende Plattform getrennt in der Höhe von der erwähnten Scheidewand ein Waschbecken, ein WC und eine Dusche auf, während die Trittplattform längs deren Umfanges mit Schiebetüren versehen ist, welche in der Durchgangsstellung an die Scheidewand gelehnt sind, welche die Dusche von den anderen hygienisch-sanitären Geräten trennt.

Die erfindungsgemässe Gruppe von hygienisch-sanitären Geräten ergibt die weitere Möglichkeit insbesondere bei einigen Stellungen der drehenden plattform jeweils mehr als ein hygienisch-sanitäres Gerät zu benutzen; so ist es z.B. möglich das WC von der einen Seite der Plattform und das Waschbecken von der anderen Seite zu benutzen vorausgesetzt naheliegenderweise, dass die gesamte Gruppe derart positioniert ist um den Zutritt sowohl von der Innenseite als auch von der Aussenseite zu gestatten. Erfindungsgemäß wird diese gestellte Aufgabe durch die Merkmale des Kennzeichnungsteils des Anspruchs 1 gelöst.

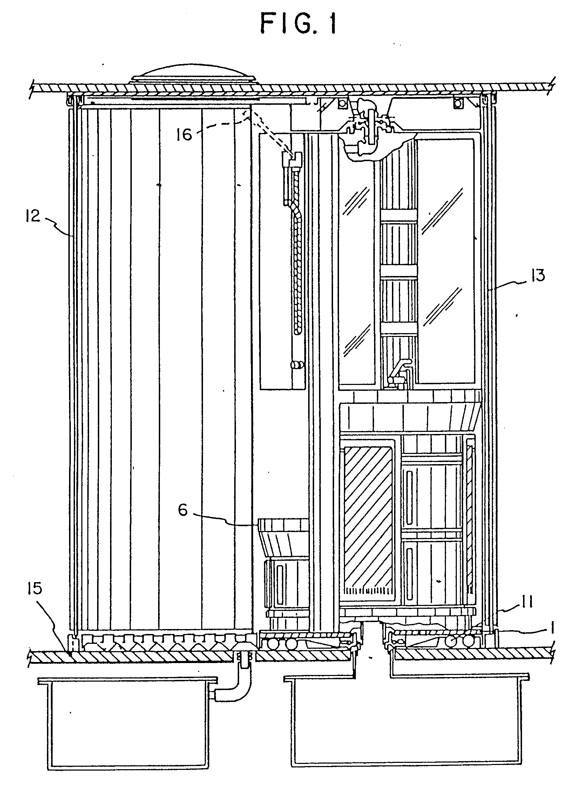

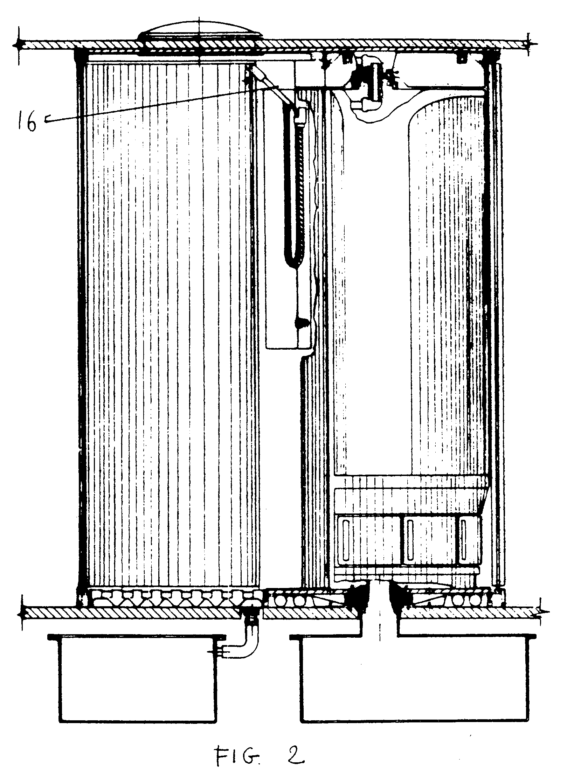

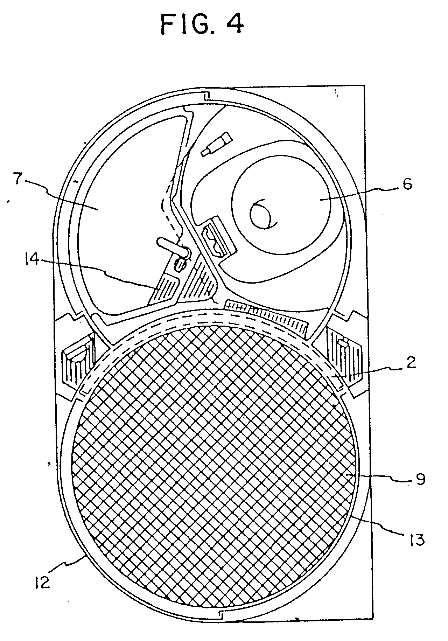

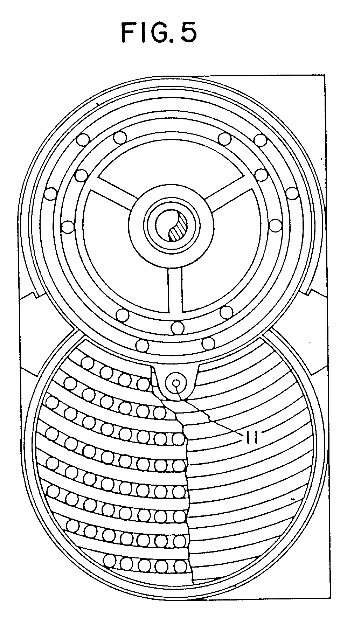

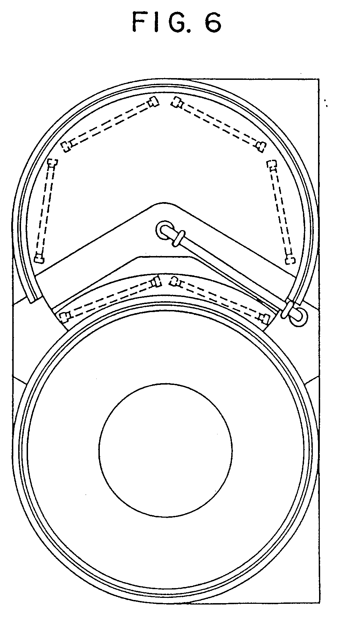

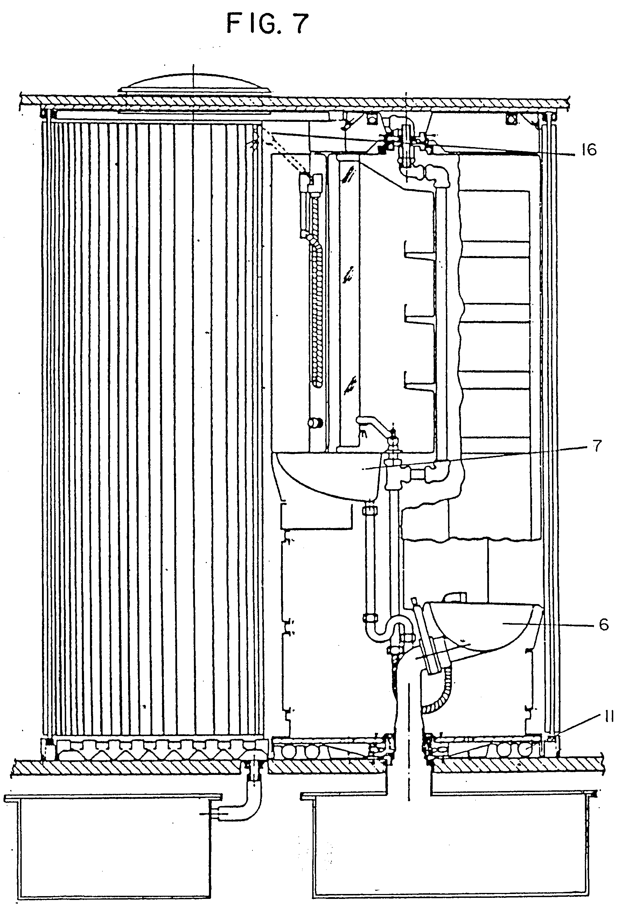

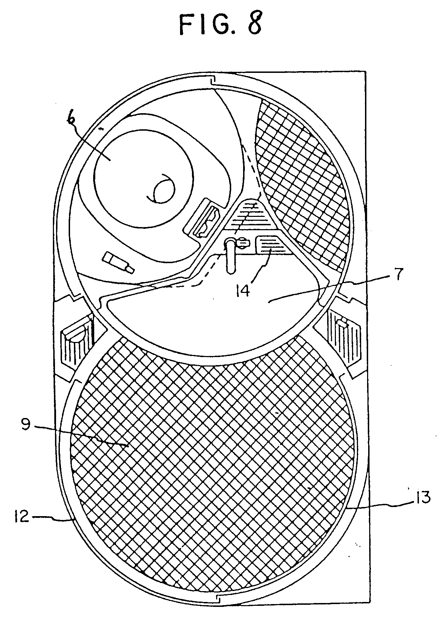

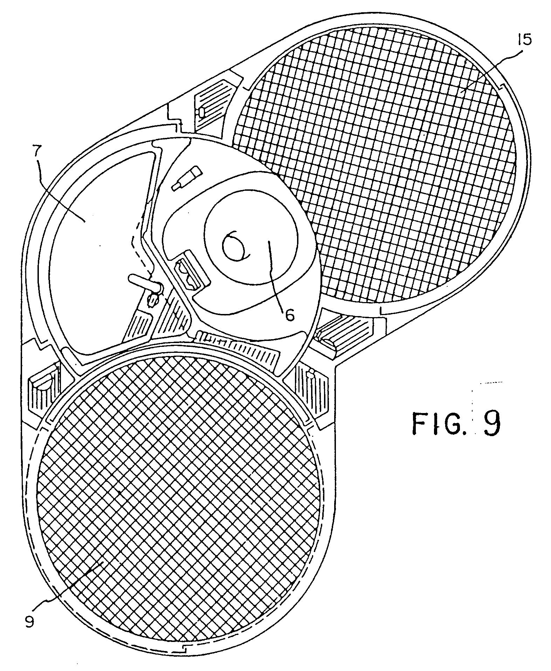

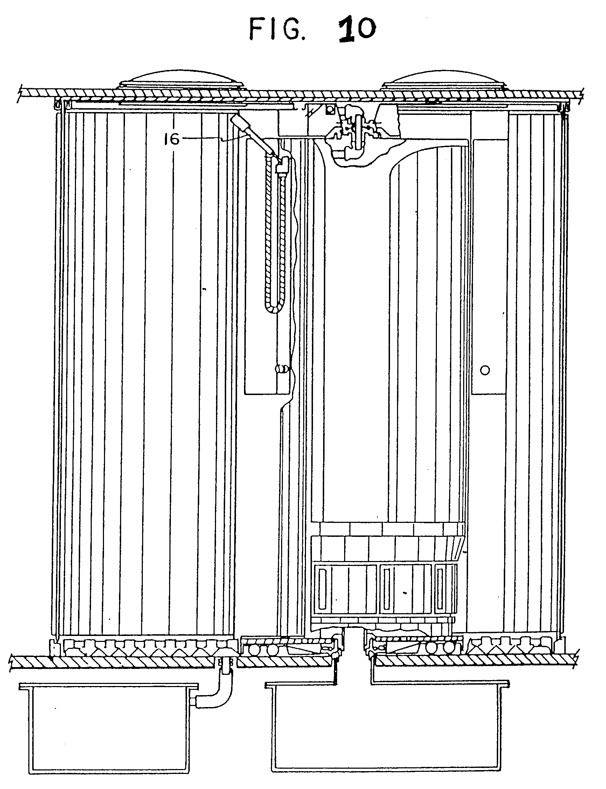

Was bisher nur zusammenfassend angedeutet wird mit der nachfolgenden ausführlichen Beschreibung anhand der anliegendenZeichnungen besser verständlich. In den Zeichnungen selbst zeigen :
Fig. 1 einen Längsschnitt der Gruppe in WC-Stellung;
Fig. 2 einen Längsschnitt der Gruppe in Dusche-Stellung;
Fig. 3 eine Darstellung im Grundriss der Gruppe in WC-Stellung;
Fig. 4 eine Darstellung um Grundriss der Gruppe in Dusche-Stellung;
Fig. 5 eine Schnittansicht der unteren Basis der Pattformen;
Fig. 6 eine Schnittansicht des oberen Teiles der Gruppe;
Fig. 7 eine mittige Längsschnittansicht der Gruppe;
Fig. 8 eine Darstellung im Grundriss der Gruppe in Waschbecken-Stellung;
Fig. 9 und 10 eine Darstellung im Grundriss und im Schnitt einer möglichen Abänderung, bei der eine zweite Plattform vorgesehen ist;
Bezugnehmend auf die anliegenden Zeichnungen und insbesondere auf die Figuren 1 bis 10 besteht die erfindungsgemässe Gruppe von hygienisch-sanitären Geräten aus einer drehenden Plattform 1, welche in drei Sektoren unterteilt ist, und aus einer Scheidewand 2, welche sich bis zu einer angemessenen Höhe erstreckt und sich in drei Ausleger teilt, wobei jeder von diesen eine sanitäre Garniture von den anderen trennt und dazu betragen kann einige für den Betrieb der sanitären Garnitur und für den Komfort des Benutzers erforderliche Elemente zu tragen.

Im von den Figuren gezeigten Fall sind die vorgesehenen Geräte ein WC 6, ein Waschbecken 7 und eine Dusche 8.

Wie vorstehend angedeutet sind die hygienisch-sanitären Geräte auf einer Plattform 1 mit kreisrundem Grundriss montiert, welche in der Mitte abgestützt und derart drehbar ist, dass der Benutzer auf der gegenüberliegenden Trittplattform 9 das jeweils gewünschte hygienisch-sanitäre Gerät für den Gebrauch zur Verfügung hat. Wie die Plattform 1 hat auch die Plattform 9 einen kreisrunden Grundriss jedoch ohnen einen kleinen Abschnitt 10, derart, dass sich die auf der gleichen Ebene liegende Plattform 1 frei drehen kann.

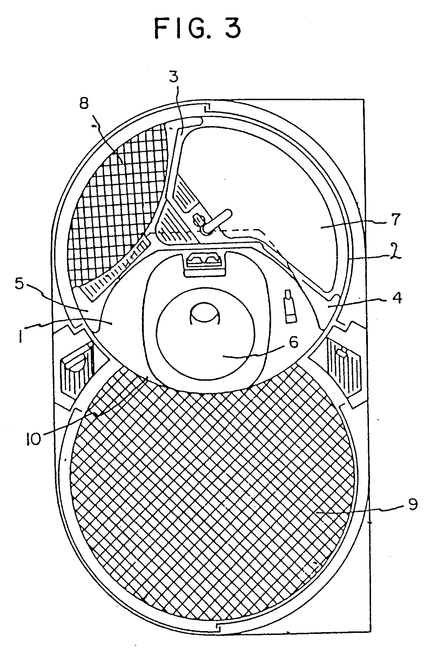

Wie man aus den in den Fig. 1,3 u.5 wiedergegebenen Schnitten entnehmen kann, ist die Plattform unterhalb mit Nylonkugeln 11 oder pirouettierenden Rädchen oder dergleichen versehen, welche innerhalb eigens dazu vorgesehener Rillen laufen und somit eine einwandfreie Drehung gestatten und insbesondere während des Gebrauches der hygienisch-sanitären Geräte, z.B. des WC 6, einem Mangel an Gleichgewicht der drehenden Plattform 1 entgegenwirken.

Beim Drehen der Plattform 1, auf der die genannten hygienisch-sanitären Geräte installiert sind, ist es naheliegenderweise erforderlich, dass sowohl die Zufuhrleitungen des Wassers zu den hygienisch-sanitären Geräten als auch die Ablassleitungen an den Kreuzungspunkten mit den feststehenden Rohrleitungen Elemente aufweisen, welche die Drehung gestatten und zugleich jeden möglichen Verlust verhindern.

Um also die Drehung des mittigen Leitungsstückes gegenüber den endseitigen Leitungsstücken zu gestatten wurden Verbindungsstücke ausgebildet, welche eigens dazu vorgesehene Kugeln, u.zw. ähnlich wie jene für Lager verwendete Kugeln, verwenden, die in zweckdienlichen Sitzen gleiten können.

Die Dichtigkeit eines drehenden Leitungsstückes gegenüber einem ortsfesten Leitungsstück wurde mit Leitungsausläufern gelöst, welche in deren Wirkung durch mehrere dazwischenliegende Dichtungen unterstützt werden.

Die Wirkungsweise der erfindungsgemässen Gruppe hygienisch-sanitärer Geräte ist äusserst einfach; der benutzer verfügt über drei meistgebrauchte hygienisch-sanitäre Geräte : Waschbecken 7, WC 6 und Dusche 8 zusammengefasst auf einer alleingen Plattform 1, welche wie vorstehend angeführt mit eigens dazu bestimmten Mitteln ausgerüstet ist, die die Drehung der Plattform selbst gewährleisten.

Ebenflächig mit der ersten Plattform 1, welche vorzugsweise einen kreisrunden Grundriss aufweist, ist eine zweite ortsfeste Plattform 9 angeordnet, welche gleichfalls kreisförmigen Grundrisses ist jedoch ohne einen Teil 10 in Übereinstimmung mit der beweglichen drehbaren Plattform 1.

Durch Drehen der drehbaren Plattform 1 bringt der Benutzer eines der drei hygienisch-sanitären Geräte in Gebrauchsstellung, derart um so benutzt werden zu können. Die zweite Plattform 9, welche je nach den Erfordernissen als Trittebene oder als Duschteller dient, ist ausser mit dem Ablass 11bis für den Duschteller mit Schiebetüren 12 und 13 versehen, welche sich der Form der ortfesten Plattform anpassen, weshalb sie bei Bedarf geschlossen werden können und damit einen Dienstraum beträchtlicher Abmessungen und mit erforderlicher "privacy" bilden.

Wenn keines der hygienisch-sanitären Geräte benutzt werden soll, werden die vorstehend genannten Schiebetüren 12 und 13 des Duschraumes übereinandergelegt und an die Scheidewand 2 gelehnt, welche die Duschen von den anderen hygienisch-sanitären Geräten trennt, wobei der Duschteller 9 vollkommen freigelegt wird, welcher z.B. mittels eines Lattenrostes oder dergleichen leicht in eine Trittebene umgeformt werden kann.

Die Zone, welche somit frei bleibt, kann z.B. als Durchgang, als Auskleideraum, usw. benutzt werden.

Aus den anliegenden Zeichnungen ist es möglich zu erkennen, dass, wenn die beschriebene Gesamtheit der hygienisch-sanitären Geräte in einer Zone positioniert ist, in welcher eine zweite oder sogar eine dritte freie Seite vorhanden ist, die Möglichkeit besteht zwei oder alle auf der Plattform 1 installierten hygienisch-sanitären Geräte gleichzeitig zu benutzen; es ist möglich z.B. für ein Kind das WC zu benutzen, währen die Dusche verwendet wird oder je nach der Lage das Waschbecken zu benutzen, während das WC in Gebrauch ist.

Die bisher beschriebene Gruppe hygienisch-sanitärer Geräte wird vorzugsweise aus Glasfaserkunststoff, aus ABS oder dergleichen gefertigt, und es können somit alle Zubehörteile vorgesehen werden, welche z.Z. allgemein gebräuchlich sind und die Benutzung angenehmer gestalten, wie z.B. Seifenhalter 14, verstellbare Brause 16, Handgriffe, Handtuchträger, Lampen, Kästchen usw. Es könnten weiters je nach den Erfordernissen einzelne oder zentralisierte Mischer für das Wasser vorgesehen sein.

Es ist einleuchtend, dass zwecks Vermeidung einer ungewollten Drehung die Plattform 1 mit zweckdienlichen Feststellvorrichtungen versehen ist.

Es ist offensichtlich, dass es für die Rotation der auf der drehenden Plattform montierten Gruppe auch möglich ist eigens dazu bestimmte Elektromotoren zu benutzen, welche zweckdienlich gesteuert ein Anhalten in einer der drei möglichen Stellungen bewirken.

Es ist ebenso offensichtlich, dass die vorgeschlagene Gruppe hygienisch-sanitärer Geräte ohne Probleme auch für Wohnungen oder andere Werke des Zivilbauwesens Verwendung finden kann, wobei z.B. nur kleine von der spezifischen Notwendigkeit des Bereiches vorgeschriebene Abänderungen vorzunehmen sind; diese Möglichkeit erbringt ein fühlbares Zeitersparnis bei der Herstellung, da die Gruppe vorgefertigt ist, und bei der Installation, da ja nur eine Verbindung der Leitungen für die Zufuhr und den Ablass erforderlich ist.

## Patentansprüche

1. Karusseleinheit mit sanitären Einrichtungen, besonders zur Verwendung in Campern, Caravans oder ähnlichen Unterkünften, wobei die sanitären Einrichtungen von einer in drei Sektoren unterteilten kreisförmigen Drehplattform (1) getragen werden, die sich über einer festen Plattform (9) befindet, dadurch gekennzeichnet, dass vor der kreisförmigen Drehplattform (1) eine weitere feste kreisförmigen Plattform (9) vorgesehen ist, bei der ein bogenförmiger Teil fehlt, der einem Abschnitt des Rundumfanges der kreisförmigen Drehplattform (1) entspricht und wobei besagte feste Plattform (9) jeweils einem Teil des Duschbeckens oder des durch den Benutzer der sanitären Einrichtungen begehbaren Bodens oder des begehbaren Bodens des Raumes entspricht,zu dem besagte feste Plattform (9) normalerweise gehört, und wobei mindestens zwei Drehschiebetüren (12,13) vorgesehen sind, die sich am Perimeter der festen kreisförmigen Plattform (9) und der kreisförmigen Drehplattform (1) befinden.

2. Karusseleinheit von sanitären Einrichtungen gemäss Patentanspruch 1, dadurch gekennzeichnet, dass die Drehplattform und mit ihr die darauf fest angebrachten sanitären Einrichtungen sich frei drehen können, wobei die aus der Decke der Box austretenden Zufuhrleitungen sowie die an ihrer Basis angebrachten Abflussrohre an den Verbindungspunkten mit denselben sowie mit dem inneren Becken zur Rückgewinnung des Abwassers sowohl an der oberen wie an der unteren Seite drehgedichtete Elemente aufweisen, die aufgrund von Kugeln oder ähnlichem sowie von Dichtungen zur Vermeidung jeglicher Undichtigkeit ein dichtes Drehen gestatten.

3. Karusseleinheit von sanitären Einrichtungen gemäss der Patentansprüche 1 und 2, dadurch gekennzeichnet, dass die Gruppe der sanitären Einrichtungen aus zwei symmetrischen Basen, je einer unteren und einer oberen sowie zwei senkrechten tragenden Säulen besteht, die zentral an der rechten und linken Seite der oben erwähnten Basen und angeordnet sind sowie durch vier Drehschiebetüren, die sich am Perimeter dieser Basen befinden sowie innerhalb der entsprechenden kreisförmigen Schienen.

4. Karusseleinheit von sanitären Einrichtungen gemäss der Patentansprüche 1-2-3 dadurch gekennzeichnet, dass die obere Basis im mittleren Bereich auf der Duschseite mit einem rationellen Mehrfunktions-Bullauge versehen ist.

5. Karusseleinheit von sanitären Einrichtungen gemäss der Patentansprüche 1-2-3-4, dadurch gekennzeichnet, dass die vier Drehschiebetüren an dem Perimeter und innen an den kreisförmigen Schienen die Benutzung der Einrichtungen unterteilt in drei Sektoren an der Drehplattform gleichzeitig durch zwei Personen sowohl vom Inneren der Duschbox sowie von aussen als zweites Nebengelass gestattet.

6. Karusseleinheit von sanitären Einrichtungen gemäss den Patentansprüchen 1-2-3-4-5, dadurch gekennzeichnet, dass durch Hinzufügen einer zweiten festen Plattform (15), die die Erstellung einer Eckausführung gestattet indem eine Tür auf der Höhe des Waschbeckens mit Angeln versehen wird, die gleichzeitige Benutzung von drei sanitären Einrichtungen auf einer Drehplattform ermöglicht , von denen sich zwei innen im Duschraum befinden und eine von aussen, wie in den beigefügten Zeichnungen veranschaulicht.

7. Karusseleinheit von sanitären Einrichtungen gemäss den Patentansprüchen 1-2-3-4-5-6, dadurch gekennzeichnet, dass die feste Plattform (9) mit Schiebetüren oder -wänden (12,13) versehen ist, die bei Nichtbenutzung der sanitären Einrichtungen übereinander an die mit der Dusche versehene Trennwand gestellt werden, sodass die feste Plattform (9) völlig frei bleibt, da die Trennwand in Funktion der Biegung der Schiebestrecke und der Form der Türen (12,13) als solche gebogen ausgebildet ist und somit in besonderen vorwiegend Caravan-bezogenen Fällen die totale Rückgewinnung des Duschbereiches als Durchgang oder als Auskleideraum gestattet, wobei jedoch stets die Möglichkeit bestehen bleibt, eine oder beide verfügbare Einrichtungen von aussen zu benutzen.

## Claims

1. An apparatus consisting of a set of sanitary appliances installed on a circular rotating platform (1), devised mainly to be used in campers, caravans and similar vehicles; the rotating platform is divided into three sectors and characterized by the fact that, in front of it, there is another circular platform (9) which, however, is immovable and lacking a curved section enabling the rotating platform (1) to move freely and which may be used as an extension of the shower basin or of the other sanitary appliances or even as extra space; the whole set is provided with at least two sliding doors (12, 13) moving along the circumference of the circular fixed platform (9) and of the circular rotating platform (2).

2. An apparatus consisting of a set of sanitary appliances as per claim 1, characterized by the fact that the rotating platform and, therefore, the sanitary appliances it carries, may rotate freely and in which the water-supply pipes descending from the ceiling and the waste-water drainage pipes applied at the base and leading to the tank are provided with rotating sealing elements that, thanks to balls or the like and to adequate gaskets and other sealing elements prevent any leaking, at the same time allowing the entire apparatus to rotate.

3. An apparatus consisting of a set of sanitary appliances, as per claims 1 and 2, characterized by the fact that the set of appliances includes two symmetrical bases of a lower column, an upper column and two vertical supporting columns located at the centre on the RH and the LH side of the above mentioned bases, besides four sliding rotating doors, moving along the circumference of the above mentioned bases and within specific circular tracks.

4. An apparatus consisting of a set of sanitary appliances, as per claims 1, 2 and 3, characterized by the fact that the top is provided with a rational multipurpose opening, in the middle of the shower section.

5. An apparatus consisting of a set of sanitary appliances, as per claims 1, 2, 3 and 4, characterized by the fact that the four sliding doors divide the rotating platform into three sectors, along the perimeter and internally along the circular tracks and enable the use of the apparatus by two persons at a time, accessing from the inside of the shower and from the outside.

6. An apparatus consisting of a set of sanitary appliances, as per claims 1, 2, 3, 4 and 5, characterized by the fact that with the addition of another fixed platform (15) allowing the formation of an angle providing a door with pivots at the height of the basin, it is possible to use three appliances at the same time, of which two are internally located inside the shower sector and one of which may be accessed from the outside, as shown in the drawing attached hereto.

7. An apparatus consisting of a set of sanitary appliances, as per claims 1, 2, 3, 4, 5, and 6, characterized by the fact that the fixed platform (9), provided with sliding doors or walls (12, 13) which, when the appliances are not being used, rest on the shower partition, thus leaving the fixed platform (9) completely unobstructed, due to the fact that the partition is structured according to the curve of the sliding section and to the shape of the doors (12, 13), curved just like the doors, and therefore enables, particularly in the case of caravans, the use of the shower sector as a passageway or changing room, while at the same time it is possible to use one of the other two appliances from the outside.

## Revendications

1. Unité à carrousel avec dispositifs sanitaires, surtout pour l'emploi dans des auto-caravanes, roulottes ou logements similaires, dans laquelle les dispositifs sont supportés par une plate-forme tournante (1) de forme circulaire, divisée en trois secteurs, qui se trouve sur une plate-forme (9) fixe, caractérisée par le fait que devant la plate-forme tournante (1) circulaire est prévue une autre plate-forme (9) circulaire fixe dont manque une partie en forme d'arc qui correspond à une section du périmètre circulaire de la plate-forme (1) tournante de forme circulaire, et où cette plate-forme (9) fixe correspond à une partie du plateau de la douche ou du sol praticable par l'utilisateur des dispositifs sanitaires ou du sol praticable du local dont normalement fait partie la plate-forme (9) fixe, et où sont prévues au moins deux portes coulissantes tournantes (12, 13) qui se trouvent sur le pourtour de la plate-forme (9) circulaire fixe et de la plate-forme tournante (2) circulaire.

2. Unité à carrousel de dispositifs sanitaires selon la revendication 1, caractérisée par le fait que la plate-forme tournante et, avec elle, les dispositifs sanitaires installés de façon stable, peuvent tourner librement, où les tuyauteries d'alimentation qui sortent du plafond du box et les tuyaux d'écoulement appliqués a leur base aux pointe de branchement des dispositifs ainsi que du bassin interne pour la récupération de l'eau de vidange, présentent sur le côté supérieur comme sur le côté inférieur des éléments hermétisés en rotation qui, grâce à des roulements à bille ou à des éléments semblables, ainsi que grâce à des joints pour l'étanchéité, permettent une rotation étanche.

3. Unité à carrousel de dispositifs sanitaires selon les revendications 1 et 2, caractérisée par le fait que le groupe des dispositifs sanitaires est constitué par deux bases symétriques d'une colonne inférieure, d'une colonne supérieure et de deux colonnes portantes verticales, disposées en position centrale sur le côté droit et sur le côté gauche des bases en question, et par quatre portes coulissantes tournantes qui se trouvent sur le pourtour de ces bases, à l'intérieur de leurs rails circulaires.

4. Unité à carrousel de dispositifs sanitaires selon les revendications 1, 2 et 3, caractérisée par le fait que la base supérieure est munie, dans le champ central, sur le côté de la douche, d'un hublot rationnel plurifonctionnel.

5. Unité à carrousel de dispositifs sanitaires selon les revendications 1, 2, 3 et 4, caractérisée par le fait que les quatre portes coulissantes tournantes divisent sur le pourtour et à l'intérieur sur les rails circulaires l'utilisation des dispositifs en trois secteurs sur la plate-forme tournante, simultanément par deux personnes de l'intérieur du box de la douche comme de l'extérieur, comme selon l'accès secondaire.

6. Unité à carrousel de dispositifs sanitaires selon les revendications 1, 2, 3, 4 et 5, caractérisée par le fait que, avec l'addition d'une deuxième plate-forme (15) fixe qui permet de former un angle en munissant une porte de charnières à la hauteur du lavabo, il est possible d'utiliser simultanément trois dispositifs sanitaires sur une plate-forme tournante, dont deux se trouvent à l'intérieur du local douche et dont un est accessible de l'extérieur, comme le montrent les dessins annexés.

7. Unité à carrousel de dispositifs sanitaires selon les revencations 1, 2, 3, 4, 5 et 6, caractérisée par le fait que la plate-forme (9) fixe est munie de portes ou de parois 512, 13) coulissantes qui, lorsque les dispositifs sanitaires ne sont pas utilisés, sont appuyées sur la paroi de division portant la douche; la plate-forme (9) fixe reste donc complètement libre, car la paroi de division est structurée, en fonction de la courbe de la partie de coulissement et de la forme des portes (12, 13), courbe comme les portes, et permet ainsi dans des cas particuliers, surtout sur l'auto-caravane, une récupération totale du box douche comme passage ou comme vestiaire, tandis qu'il est toujours possible d'utiliser de l'extérieur l'un des deux dispositifs disponibles.
